# EUROPÄISCHE PATENTANMELDUNG

(11) **EP 4 312 202 A1**
(43) Veröffentlichungstag der Anmeldung: **31.01.2024**
(21) Anmeldenummer: 22187509.9
(22) Anmeldetag: 28.07.2022
(51) Int. Cl.: G09B 5/06

(54) **E-LEARNING SYSTEM**

(71) Anmelder: Siemens Aktiengesellschaft, 80333 München (DE)
(72) Erfinder: Groten, Raphaela Dr., 52070 Aachen (DE); Johnson, Rebecca, 81739 München (DE)
(74) Vertreter: Siemens Patent Attorneys

(57) **Zusammenfassung**

Die Erfindung betrifft ein Verfahren zum Unterstützen eines E-Learnings, wobei im Rahmen des E-Learnings einer Person (P) Lerninhalte (CONTENT) zu präsentieren sind. Es werden Messungen zur Erfassung von Atem-Informationen betreffend die Atmung der Person (P) durchgeführt. Unter Verwendung der Atem-Informationen (BREATH) wird eine Prognose (INHALE) betreffend zukünftige Einatemvorgänge der Person (P) berechnet. Es erfolgt eine Bestimmung von zumindest einem Zeitpunkt für die Präsentation von zumindest einem Teil der Lerninhalte (CONTENT), wobei der zumindest eine Zeitpunkt von der berechneten Prognose (INHALE) abhängt.

## Beschreibung

Die Erfindung betrifft ein System und ein Verfahren zum Unterstützen eines E-Learnings, wobei im Rahmen des E-Learnings einer Person Lerninhalte zu präsentieren sind.

Die Qualität von Upskilling / Weiter- und Ausbildung nimmt einen immer höheren Stellenwert ein. Dies gilt sowohl im Arbeitsumfeld als auch im privaten Bereich. Besonders für Unternehmen birgt es daher ein enormes Potential, den Wissenstransfer auf die eigenen Mitarbeiter effizienter zu gestalten. Insbesondere gefördert durch Entwicklungen während der Corona-Pandemie wird bevorzugt das E-Learning - auch als Electronic Learning oder E-Lernen bezeichnet - als flexible, sichere und kostengünstige Art des Lernens eingesetzt. E-Learning umfasst verschiedene Lernformen, die durch elektronische, technische oder digitale Medien unterstützt werden. Üblicherweise befindet sich der Lernende dabei an seinem Computer, Smartphone oder ähnlichem Gerät, durch welches ihm Lerninhalte auditiv und/oder visuell präsentiert werden.

Es ist bekannt, dass die limitierte Aufnahme- und Speicherkapazität des menschlichen Gehirns zu Einschränkungen beim Lernen führen kann. Erlerntes wird oft dann nachhaltig im menschlichen Gehirn gespeichert, wenn die Informationen zu einem geeigneten Zeitpunkt präsentiert werden.

Der Erfindung liegt die Aufgabe zugrunde, ein Verfahren zum Unterstützen von E-Learning aufzuzeigen.

Diese Aufgabe wird durch ein Verfahren mit den Merkmalen des Anspruchs 1 gelöst. Ferner sind Gegenstand der Erfindung eine entsprechende Vorrichtung oder ein System zur Datenverarbeitung, ein entsprechendes Computerprogramm, ein entsprechendes computerlesbares, vorzugsweise nichtflüchtiges, Speichermedium, und ein entsprechendes Datenträgersignal. Vorteilhafte Ausgestaltungen und Weiterbildungen sind Gegenstand von Unteransprüchen.

Das erfindungsgemäße Verfahren dient der Unterstützung eines E-Learnings, wobei im Rahmen des E-Learnings einer Person Lerninhalte zu präsentieren sind. Es werden Messungen zur Erfassung von Atem-Informationen betreffend die Atmung der Person durchgeführt. Unter Verwendung der Atem-Informationen wird eine Prognose betreffend zukünftige Einatemvorgänge der Person berechnet. Es erfolgt eine Bestimmung von zumindest einem Zeitpunkt für die Präsentation von zumindest einem Teil der Lerninhalte, wobei der zumindest eine Zeitpunkt von der berechneten Prognose abhängt.

Der Inhalt der Lerninhalte ist hierbei an sich beliebig, auch die Art der Präsentation zur Aufnahme durch die Person kann unterschiedlich sein. Ziel des Vorgehens ist eine zumindest zeitweise Synchronisation zwischen der Atmung, insbesondere den Einatem-Phasen der Person, und der Präsentation von Lerninhalten. Hierdurch können besonders wichtige Teile der Lerninhalte während dem Einatmen präsentiert werden, wodurch das Erinnern dieser Informationen verbessert wird.

Hierzu wird die Atmung der Person beobachtet. Dies erfolgt durch Messungen, wodurch Atem-Informationen zur Verfügung stehen. Diese Atem-Informationen können verschieden ausgestaltet sein, sie müssen jedoch ermöglichen, hieraus eine Prognose betreffend zukünftige Einatemvorgänge zu berechnen. Vorteilhafterweise zeigen die Atem-Informationen direkt die Zeitpunkte und Längen vergangener Einatemvorgänge an, oder diese beiden Größen sind aus den Atem-Informationen ableitbar. D.h. aufgrund der Messungen ist es möglich, Aussagen über das zukünftige Atemverhalten der Person zu treffen. Der für die Prognose relevante Zeitraum, d.h. die in der Zukunft liegende Zeitspanne, auf die sich die Prognose bezieht, kann sich über eine oder mehrere Atemzyklen erstrecken, z.B. können die nächsten n Einatmungen prognostiziert werden, wobei n vorzugsweise zwischen 3 und 10 liegt.

Besonders vorteilhaft ist es daher, wenn der zumindest eine Zeitpunkt innerhalb eines gemäß der Prognose stattzufindenden Einatemvorgangs liegt. Der Zeitpunkt kann zum prognostizierten Beginn einer Einatmung liegen, so dass mit der Präsentation des betreffenden Teils der Lerninhalte gleich zu Beginn der Einatmung begonnen werden soll.

Die Erfassung der Atem-Informationen kann mittels eines Mikrophons und/oder einer Kamera und/oder eines Bewegungssensors und/oder eines Beschleunigungssensors erfolgen. Für die Beobachtung der menschlichen Atmung stehen verschiedene an sich bekannte Messmethoden zur Verfügung, welche sich eines hierfür geeigneten Sensors der genannten Art bedienen können.

Die Prognose betreffend zukünftige Einatemvorgänge kann den oder die Zeitpunkte und die Länge oder Längen einer oder mehrerer zukünftiger Einatemvorgänge der Person umfassen. Wenn nicht nur der Zeitpunkt einer Einatem-Phase vorhergesagt wird, sondern auch deren Länge, kann der Umfang der während dieses Einatemvorgangs präsentierbaren Informationen besser bestimmt werden.

Eine bereits berechnete Prognose kann basierend auf neuen Atem-Informationen aktualisiert werden. Wenn die Messungen zur Erfassung von Atem-Informationen kontinuierlich erfolgen, kann überprüft werden, ob diese bereits berechnete Prognose korrekt ist oder aufgrund neuer Messungen anzupassen ist, z.B. an ein leicht verändertes Atemmuster der Person.

Zuvor, d.h. vor Beginn der Durchführung des Verfahrens, werden die zu präsentierenden Lerninhalte derart strukturiert, dass eine Teilmenge der Lerninhalte zur Präsentation während eines Einatemvorgangs markiert ist. Diese Markierung kann z.B. durch ein flag oder eine andersartige Kennzeichnung der jeweiligen Inhalte erfolgen. Es ist auch möglich, dass diese Teilmenge von den restlichen Lerninhalten getrennt gespeichert wird. Für diese Strukturierung bedarf es einerseits einer inhaltlichen Analyse der Lerninhalte, so dass z.B. Kerninhalte markiert werden können, und andererseits einer geeigneten datenverarbeitungstechnischen Art der Markierung, so dass die markierte Teilmenge so abrufbar ist, dass sie zur Präsentation zu bestimmten Zeitpunkten zur Verfügung steht.

Zu dem zumindest einen bestimmten Zeitpunkt kann dann der zumindest eine Teil der Lerninhalte der Person über ein elektronisches Ausgabegerät auditiv und/oder visuell präsentiert werden. Das E-Learning findet also vorzugsweise nach Maßgabe der bestimmten, an die Einatemvorgänge angepassten Zeitpunkte, statt.

Das erfindungsgemäße Verfahren und/oder eine oder mehrere Funktionen, Merkmale und/oder Schritte des erfindungsgemäßen Verfahrens und/oder einer seiner Ausgestaltungen können computergestützt ablaufen. Es kann beispielsweise mittels eines oder mehrerer Computer, Prozessoren, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden. Es kann auch zumindest teilweise in einer Cloud und/oder in einer Edge-Computing-Umgebung ausgeführt werden. Für den computergestützten Ablauf kommt eines oder mehrere miteinander zusammenwirkende Computerprogramme zum Einsatz. Werden mehrere Programme verwendet, so können diese gemeinsam auf einem Computer gespeichert und von diesem ausgeführt werden, oder auch auf verschiedenen Computern an verschiedenen Orten. Da dies funktional gleichbedeutend ist, wird vorliegend im Singular "das Computerprogramm" und "der Computer" formuliert.

Es ist insbesondere möglich, dass das erfindungsgemäße Computerprogramm nicht alle Schritte des oben beschriebenen Verfahrens durchführt. Insbesondere die Messungen zur Erfassung von Atem-Informationen betreffend die Atmung der Person können unabhängig von dem Computerprogramm durchgeführt werden, und das Computerprogramm empfängt die Atem-Informationen als Eingangsgröße für die weiteren von ihm durchzuführenden Schritte. Entsprechendes gilt auch für die Vorrichtung oder das System zur Datenverarbeitung.

Im Folgenden wird die Erfindung anhand eines Ausführungsbeispiels näher erläutert. Dabei zeigen:
- Figur 1:: eine E-Learning Umgebung,
- Figur 2:: ein Ablaufdiagramm,
- Figur 3:: ein E-Learning System.

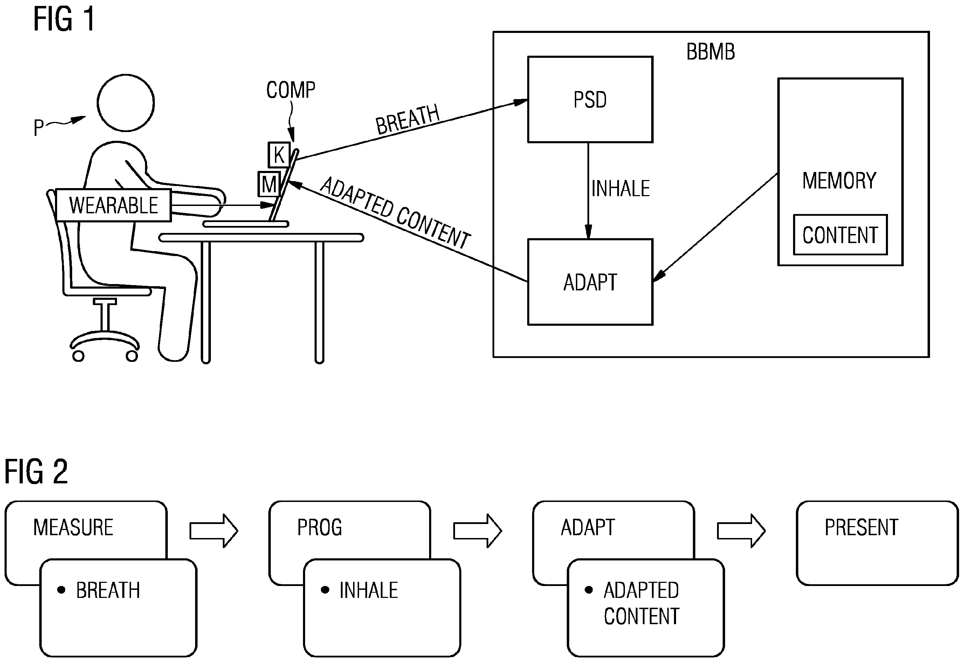

Figur 1 zeigt eine Person P in einer E-Learning Umgebung. Die Person P führt ein CBT (Computer Based Training) oder ein WBT (Web Based Training) durch, wofür sie einen Computer COMP nutzt. Der Computer COMP verfügt hierzu über geeignete, in der Figur nicht vollständig dargestellte Ein- und Ausgabeeinrichtungen. Außer dem in der Figur dargestellten Laptop kann der Computer COMP jegliches geeignete elektronische Gerät sein, wie z.B. ein PDA, Mobiltelefon oder Smartphone, oder auch ein nicht mobiles Gerät wie ein Desktopcomputer, eine Workstation, ein Server, oder dergleichen.

Der E-Learning Vorgang wird durch das BBMB-Modul BBMB (BBMB: Breath Based Memory Boost) gesteuert, dessen Funktionsweise im Folgenden erläutert wird. Das BBMB-Modul BBMB kann hierbei Teil des Computers COMP sein; alternativ kann es auf einem anderen, mit dem Computer COMP verbundenen Computer der Person P realisiert sein, oder auch im Internet oder einem anderen Rechnernetzwerk. In einem Speicher MEMORY, welcher Bestandteil des BBMB-Moduls BBMB ist, oder auf welchen das BBMB-Modul BBMB zugreifen kann, ist der Lerninhalt CONTENT abgelegt. Hierbei handelt es sich um eine digitale Form der Informationen, welche der Person P im Rahmen des E-Learnings präsentiert werden sollen. Die Präsentation des Lerninhalts CONTENT erfolgt über den Computer COMP, insbesondere als auditive und/oder visuelle Ausgabe.

Neurologische Studien konnten zeigen, dass Information, die Probanden während des Einatmens präsentiert wurden, besser erinnert wurden als solche, die beim Ausatmen gezeigt wurden. Diese Erkenntnis macht sich das BBMB-Modul BBMB zunutze. Dies erfolgt, indem ein Modul PSD zur physiologischen Signalerkennung (PSD: Physiological Signal Detection) als Ergänzung zum E-Learning eingesetzt wird, wodurch der präsentierte Lerninhalt auf die Konstitution und die physiologischen Gegebenheiten des Lernenden angepasst werden kann.

Dem Modul PSD werden aktuelle Informationen BREATH über die Atemtätigkeit der Person P zur Verfügung gestellt. Die Erfassung der aktuellen Atemtätigkeit kann über ein am Computer COMP befindliches Mikrofon M erfolgen, welches die Atemgeräusche der Person P erfasst, oder über eine am Computer COMP befindliche Kamera K, welche Bewegungen des Brustkorbs erfasst. Alternativ kann zur Erfassung der Informationen BREATH ein Wearable zum Einsatz kommen, welches - wie in der Figur gezeigt - ein Brustgurt sein kann, oder alternativ auch am Kopf oder Handgelenk befestigt wird. Beispiele für auf dem Markt befindliche Produkte zur Erfassung der Atemtätigkeit sind Kopfhörer wie die AirPods mit integrierten Mikrophonen, oder die Apple Watch, welche mittels Beschleunigungssensoren die Atemfrequenz misst.

Die Informationen BREATH, welche das Modul PSD empfängt, ermöglichen dem Modul PSD zunächst die Ermittlung der in der Vergangenheit liegenden Zeitpunkte und Längen der Einatmung 9der Person P. Hieraus können über die aktuelle Atemfrequenz mittels Extrapolation die Zeitpunkte und Längen INHALE der zukünftigen Einatmung bestimmt werden. Beispielsweise können ausgehend von dem Zeitpunkt der letzten Einatmung mittels der aktuellen Atemfrequenz, welche über einen bestimmten vor dieser letzten Einatmung liegenden Zeitraum gemittelt wurde, die Zeitpunkte und Längen INHALE der nächsten n Einatmungen vorhergesagt werden. Da das Modul PSD die Informationen BREATH kontinuierlich empfängt, können diese berechneten zukünftigen Werte INHALE anhand von neu empfangenen Informationen BREATH überprüft und gegebenenfalls korrigiert werden.

In dem Modul ADAPT findet eine Anpassung der Lerninhalte CONTENT derart statt, dass Kerninhalte bevorzugt während der Einnatem-Phasen präsentiert werden. Hierzu sind die Lerninhalte CONTENT bereits derart strukturiert, dass ein Teil hiervon als Kerninhalt markiert ist. Auf welche Weise eine Unterscheidung zwischen Kerninhalt und nicht-Kerninhalt durchgeführt wird, hängt stark von dem konkreten Inhalt des Lerninhalts CONTENT ab, so dass hierzu keine weiteren Ausführungen erforderlich sind. Die Kerninhalte sollten jedoch so portioniert sein, dass jeweils ein Teil hiervon innerhalb einer typischen Einatmung präsentiert werden kann. Es ist auch möglich, neben den beiden Grundtypen Kerninhalt und nicht-Kerninhalt eine weitere Aufgliederung der Lerninhalte CONTENT vorzunehmen, so z.B. Informationen mittlerer Wichtigkeit, welche vorzugsweise, aber nicht ausschließlich während der Einatmung zu präsentieren sind. Von dem Modul ADAPT werden denn angepasste Lerninhalte ADAPTED CONTENT an den Computer COMP zur Ausgabe an die Person P übermittelt. In diesen angepassten Lerninhalten ADAPTED CONTENT ist für die Kerninhalte ein Zeitpunkt vorgegeben, wann diese zu präsentieren sind. Diese Zeitpunkte entsprechen dem oder den nächsten von dem Modul PSD ermittelten Phasen der Einatmung.

Der Einsatz des BBMB-Moduls BBMB ermöglicht es somit, die Präsentation der Lerninhalte und damit die Interaktion zwischen Mensch und Computer auf physiologische Maße des Lernenden abzustimmen. Die beschriebene Anpassung der Lerninhalte CONTENT geschieht unabhängig von der Ausgabemodalität der Lernsoftware, sowohl auditive (Lautsprecher, Kopfhörer) als auch visuelle Inhalte (Display) können auf diese Weise verstärkt werden.

Zusammenfassend zeigt Figur 2 ein Ablaufdiagramm zu dem geschilderten Vorgehen. In einem ersten Schritt MEASURE wird die Atemtätigkeit des Lernenden auf an sich bekannte Weise erfasst. Die hierbei ermittelten Informationen BREATH können somit dem BBMB-Modul BBMB zur Verfügung gestellt werden. Im folgenden Schritt PROG erfolgt eine Prognose des zukünftigen Atemverhaltens des Lernenden. Somit stehen der oder die Zeitpunkte und Längen der nächsten Einatmung(en) INHALE zur Verfügung. Anschließend können im Schritt ADPAT die Lerninhalte auf die prognostizierten Informationen INHALE abgestimmt werden. Dadurch wird für zumindest einen Teil der Lerninhalte ein Zeitpunkt bestimmt, wann diese dem Lernenden zu präsentieren ist. Die entsprechende Vorgabe ADAPTED CONTENT wird dem Computer, an welchem der Lernende das E-Learning durchführt, zur Verfügung gestellt. Im Anschluss kann im Schritt PRESENT der Lerninhalt entsprechend der Vorgabe ADAPTED CONTENT präsentiert werden. Die gezeigten Schritte laufen während des E-Learnings kontinuierlich ab, d.h. es wird während der gesamten Lernzeit die Atemtätigkeit gemonitort und die entsprechend hierauf aufbauenden Schritte durchgeführt.

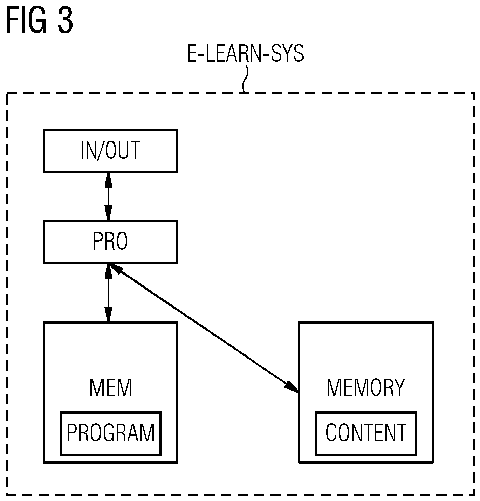

Figur 3 zeigt schematisch, wie ein für die beschriebene Vorgehensweise geeignetes E-Learning System E-LEARN-SYS aufgebaut sein kann. Während die im Folgenden näher erläuterten Bestandteile in der Figur einfach vorhanden sind, ist es auch möglich, dass diese in mehrfacher Ausführung vorhanden sind, z.B. als verteiltes System. Auf diese Weise kann die Funktionalität des E-Learning System E-LEARN-SYS auf mehrere, gegebenenfalls hierarchisch miteinander verknüpfte, Systeme aufgeteilt werden. Dieses oder diese können sich bei dem Lernenden oder auch in einem von ihm entfernten Rechnernetz befinden.

Das E-Learning System E-LEARN-SYS umfasst eine Recheneinheit bzw. einen Prozessor PRO. Dieser ist verbunden mit einem Speicher MEM, in welchem ein Computerprogramm PROGRAM abgelegt ist, und auch mit einem Speicher MEMORY, auf welchem sich der Lerninhalt CONTENT befindet. Die Speicher MEM und MEMORY können auch als ein einziger Speicher realisiert sein. Bei ihnen handelt es sich vorzugsweise um nicht-flüchtige computerlesbare Datenspeichermedien. Die Speicherung kann auf jegliche Weise erfolgen, welche geeignet ist, die Auslesbarkeit durch eine Recheneinheit zu gewährleisten, wie durch magnetische Speicherung, z.B. mittels Diskette, optische Speicherung, z.B. mittels CD, magneto-optische Speicherung, ROM (Read Only Memory) Speicherung, RAM (Random Access Memory) Speicherung, EPROM (Erasable Programmable Read-Only Memory), EEPROM (Electrically Erasable Programmable Read-Only Memory), Flash-Memory.

Durch Ausführen der Instruktionen des Programms PROGRAM in dem Prozessor PRO werden die Schritte der oben erläuterten Vorgehensweise durchgeführt. Insbesondere die in Bezug auf die Module PSD und ADAPT beschriebenen Schritte sind im Programm PROGRAM implementiert. Der Prozessor PRO ist ferner mit einer Ein- und Ausgabeeinheit IN/OUT verbunden, über welche Informationen zwischen dem E-Learning System E-LEARN-SYS und anderen Komponenten und/oder einem Nutzer ausgetauscht werden können. Insbesondere ist über diese Schnittstelle der Empfang von Informationen betreffend die Atmung, sowie die Ausgabe von Lerninhalten möglich. Hierzu ist diese Schnittstelle auf geeignete Weise ausgestaltet, z.B. über Funk oder über Kabel, und die Kommunikation kann über geeignete Standards erfolgen.

Die Erfindung wurde voranstehend an einem Ausführungsbeispiel beschrieben. Es versteht sich, dass zahlreiche Änderungen und Modifikationen möglich sind, ohne dass der Rahmen der Erfindung verlassen wird.

## Patentansprüche

1. Verfahren zum Unterstützen eines E-Learnings, wobei im Rahmen des E-Learnings einer Person(P) Lerninhalte (CONTENT) zu präsentieren sind,
bei dem
Messungen zur Erfassung von Atem-Informationen betreffend die Atmung der Person (P) durchgeführt werden, unter Verwendung der Atem-Informationen (BREATH) eine Prognose (INHALE) betreffend zukünftige Einatemvorgänge der Person (P) berechnet wird,
eine Bestimmung von zumindest einem Zeitpunkt für die Präsentation von zumindest einem Teil der Lerninhalte (CONTENT) erfolgt,
wobei der zumindest eine Zeitpunkt von der berechneten Prognose(INHALE) abhängt.

2. Verfahren nach Anspruch 1, bei dem
der zumindest eine Zeitpunkt innerhalb eines gemäß der Prognose (INHALE) stattzufindenden Einatemvorgangs der Person (P) liegt.

3. Verfahren nach einem der Ansprüche 1 bis 2, bei dem die Erfassung der Atem-Informationen (BREATH) mittels eines Mikrophons (M) und/oder einer Kamera (K) und/oder eines Bewegungssensors und/oder eines Beschleunigungssensors erfolgt.

4. Verfahren nach einem der Ansprüche 1 bis 3, bei dem die Messungen zur Erfassung der Atem-Informationen (BREATH) mittels eines, vorzugsweise am Körper getragenen, Computers (WEARBLE, COMP) durchgeführt werden.

5. Verfahren nach einem der Ansprüche 1 bis 4, bei dem die Prognose (INHALE) betreffend zukünftige Einatemvorgänge den oder die Zeitpunkte und die Länge oder Längen einer oder mehrerer zukünftiger Einatemvorgänge der Person (P) umfasst.

6. Verfahren nach einem der Ansprüche 1 bis 5, bei dem die berechnete Prognose (INHALE) basierend auf neuen Atem-Informationen (BREATH) aktualisiert wird.

7. Verfahren nach einem der Ansprüche 1 bis 6, bei dem zuvor die zu präsentierenden Lerninhalte (CONTENT) derart strukturiert werden, dass eine Teilmenge der Lerninhalte (CONTENT) markiert ist zur Präsentation während eines Einatemvorgangs.

8. Verfahren nach einem der Ansprüche 1 bis 7, bei dem zu dem zumindest einen bestimmten Zeitpunkt der zumindest eine Teil der Lerninhalte (CONTENT) der Person (P) über ein elektronisches Ausgabegerät (COMP) auditiv und/oder visuell präsentiert wird.

9. Vorrichtung oder System zur Datenverarbeitung (E-LEARN-SYS), umfassend Mittel zur Ausführung des Verfahrens nach einem der Ansprüche 1 bis 8.

10. Computerprogramm (PROGRAM), umfassend Befehle, die bei der Ausführung des Programms durch einen Computer diesen veranlassen, die Schritte des Verfahrens nach einem der Ansprüche 1 bis 8 auszuführen.

11. Computerlesbares Speichermedium (MEM) mit einem Computerprogramm (PROGRAM) nach Anspruch 10.

12. Datenträgersignal, das das Computerprogramm (PROGRAM) nach Anspruch 10 überträgt.
